# EUROPEAN PATENT APPLICATION

(11) **EP 4 672 090 A1**
(43) Date of publication of application: **31.12.2025**
(21) Application number: 25184833.9
(22) Date of filing: 24.06.2025
(51) Int. Cl.: G06N 3/0455, G06N 3/063, G06N 3/0475

(54) **SYSTEMS AND METHODS FOR FETCHING MACHINE LEARNING MODELS**

(30) Priority: 28.06.2024 US 202463666105 P; 04.10.2024 US 202463703895 P; 20.02.2025 US 202563760905 P; 30.05.2025 US 202519224185
(71) Applicant: Samsung Electronics Co., Ltd., Suwon-si, Gyeonggi-do 16677 (KR)
(72) Inventor: SAJID, Usman, San Jose, CA, 95134 (US); NGUYEN, Marie Mai, San Jose, CA, 95134 (US); PEI, Shuyi, San Jose, CA, 95134 (US); KIM, Younghoon, San Jose, CA, 95134 (US); PITCHUMANI, Rekha, San Jose, CA, 95134 (US)
(74) Representative: Kuhnen & Wacker Patent- und Rechtsanwaltsbüro PartG mbB

(57) **Abstract**

Systems and methods for fetching machine learning models are disclosed. A processor identifies an input to a first machine learning model having a first layer and a second layer. The processor identifies from a table, based on the input, a second machine learning model associated with the first layer and a third machine learning model associated with the second layer. Based on identifying the second machine learning model and the third machine learning model from the table, the processor transmits a command to fetch the second machine learning model and the third machine learning model from the first storage medium into the second storage medium. and executes the second machine learning model and the third machine learning model for generating a prediction based on the input.

## Description

### FIELD

One or more aspects of embodiments according to the present disclosure relate to machine learning, and more particularly to fetching machine learning models.

### BACKGROUND

The use of artificial intelligence (AI) has increased dramatically over the last few years. AI has become commonly used in domains such as image classification, speech recognition, media analytics, heath care, autonomous machines, smart assistants, and the like. Using AI often necessitates retrieval of machine learning models from a storage medium in an efficient and cost-effective manner.

The above information disclosed in this Background section is only for enhancement of understanding of the background of the present disclosure, and therefore, it may contain information that does not form prior art.

### SUMMARY

One or more embodiments of the present disclosure are directed to a system comprising: a first storage medium; a second storage medium; a processor; and a memory. The memory stores instructions that, when executed by the processor, cause the processor to: identify an input to a first machine learning model having a first layer and a second layer; identify from a table, based on the input, a second machine learning model associated with the first layer and a third machine learning model associated with the second layer; based on identifying the second machine learning model and the third machine learning model from the table, transmit a command to fetch the second machine learning model and the third machine learning model from the first storage medium into the second storage medium; and execute the second machine learning model and the third machine learning model for generating a prediction based on the input.

According to some embodiments, an access latency of the first storage medium is higher than an access latency of the second storage medium.

According to some embodiments, the first layer and the second layer respectively include a first transformer layer and a second transformer layer of a neural network.

According to some embodiments, the second machine learning model and the third machine learning model respectively include a first neural network with a first set of parameters and a second neural network with a second set of parameters.

According to some embodiments, the second machine learning model and the third machine learning model are respectively trained for a first task and a second task.

According to some embodiments, the input is a token and the table stores the token, a first identifier for the second machine learning model, and a second identifier for the third machine learning model.

According to some embodiments, the table includes a plurality of words used to train the first machine learning model.

According to some embodiments, the processor is further configured to: identify a first word of the plurality of words; provide the first word to the first layer of the first machine learning model, wherein the first layer is configured to select the second machine learning model and generate a first output based on the first word; store in the table a first identifier to the second machine learning model, in association with the first word and the first layer; provide the first output of the first layer to the second layer of the first machine learning model, wherein the second layer is configured to select the third machine learning model and generate a second output based on the first output; and store in the table a second identifier to the third machine learning model, in association with the first word and the second layer.

According to some embodiments, the input includes a first token generated by the first machine learning model, wherein the prediction includes a second token generated based on the first token.

According to some embodiments, the first machine learning model includes a large language model.

One or more embodiments of the present disclosure are directed to a method comprising: identifying an input to a first machine learning model having a first layer and a second layer; identifying from a table, based on the input, a second machine learning model associated with the first layer and a third machine learning model associated with the second layer; based on identifying the second machine learning model and the third machine learning model from the table, transmitting a command to fetch the second machine learning model and the third machine learning model from a first storage medium into a second storage medium; and executing the second machine learning model and the third machine learning model for generating a prediction based on the input.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a system for executing a machine learning model according to one or more embodiments of the present disclosure;
FIG. 2 depicts a block diagram of an LLM executed by a processor according to one or more embodiments of the present disclosure;
FIG. 3 depicts a conceptual diagram of various phases executed by an LLM as it undergoes an inference process based on an input query or prompt according to one or more embodiments of the present disclosure;
FIG. 4 depicts a prefetch table according to one or more embodiments of the present disclosure;
FIG. 5 depicts a conceptual diagram of a process for populating a prefetch table according to one or more embodiments of the present disclosure;
FIG. 6 depicts a conceptual diagram of a process for retrieving or fetching experts from a slow memory to a fast memory according to one or more embodiments of the present disclosure;
FIG. 7 depicts a flow diagram of a process for prefetching experts according to one or more embodiments of the present disclosure;
FIG. 8 depicts a flow diagram of an LLM inference process using experts according to one or more embodiments of the present disclosure; and
FIG. 9 depicts a flow diagram of a process for fetching and executing experts according to one or more embodiments of the present disclosure.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specificallyconfigured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

A large language model (LLM) may use one or more smaller machine learning models or neural networks (referred to as "experts") to improve the performance of the LLM. An LLM that selects and uses experts may be referred to as a Mixture of Experts (MoE)-LLM. Although MoE-LLMs is used herein as a specific type of machine learning model, a person of skill in the art should recognize that embodiments of the present disclosure may extend to other types of machine learning models that use smaller models to make an inference.

Using LLM as an example, the LLM may include multiple neural network layers that are executed to infer an output token based on an input token. A neural network layer may invoke an expert to generate the output token. The expert may be stored in a memory that may be slower to access than, for example, another memory. For example, the expert may be stored in a low-power double data rate (LPDDR) memory and retrieved to a faster memory (e.g., a high bandwidth memory (HBM)) prior to its use.

The selection of the expert may be based on the particular input token and the particular layer of the LLM that is executed. In some systems, the expert may be identified and retrieved from the slow memory to the fast memory during or before its layer execution . Such an on-demand fetching of the expert may incur latencies, including latencies due to the communication with the slow memory during the execution of the layer. The on-demand fetching may also fail to maximize bandwidth usage.

In general terms, embodiments of the present disclosure are directed to systems and methods for fetching experts for a machine learning model such as, for example, an MoE-LLM. In some embodiments, a prefetch module identifies and retrieves (e.g., prefetches) a subset of experts from a slower memory to a faster memory, prior to the model executing a first layer of the model to generate an output token based on the input token.

In some embodiments, a prefetch table is populated with information on one or more experts to be prefetched per token, per layer. The prefetch table may be populated once, for example, for a trained model, prior to use of the model to make inferences. In some embodiments, the prefetch table identifies experts for one or more tokens (e.g., all the tokens) that the model is trained to process, for one or more layers (e.g., all the layers) of the model.

In order to populate the prefetch table, the prefetch module may provide a token in the model's vocabulary as an input to a layer of the trained model. A local selector of the layer may identify one or more experts that are predicted to be the most appropriate to process an input including the token, to generate an intermediate output. Identification information of the one or more experts selected by the local selector may be stored in the prefetch table in association with the input token and the layer. The process may repeat for the remaining layers of the model, and for the other tokens in the model's vocabulary.

In some embodiments, the LLM is invoked for generating an output based on an input. The output may be, for example, a response to an input query provided to the LLM. The LLM may iteratively generate output tokens to be used in the response based on the input query. In order to generate an output token, the LLM may invoke the prefetch module to begin prefetching the experts identified in the prefetch table for an input token. In some embodiments, the prefetch module may transmit a command to prefetch the experts identified for the input token for N layers of the LLM. The prefetching of experts may allow for improved efficiency in the generating of output tokens, and improved data movement and bandwidth usage as experts are retrieved from a slow memory to a fast memory. The prefetching of experts may also be applicable to a tiered memory solution with fast memory and slow memory tiers.

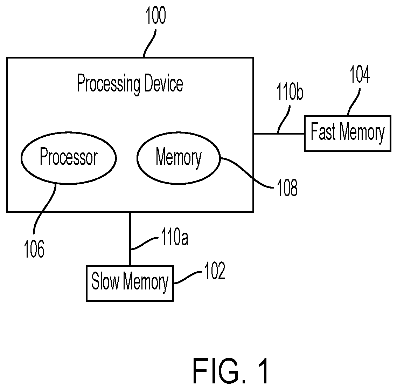

FIG. 1 depicts a block diagram of a system for executing a machine learning model according to one or more embodiments. The system includes a processing device 100 coupled to a slow memory 102 and a fast memory 104 over one or more data communication links 110a, 110b (collectively referenced as 110). The data communication links 110 may include, for example, a compute express link (CXL) bus, peripheral component interconnect express (PCIe) bus, Ethernet, Universal Serial Bus (USB), and/or any wired or wireless data communication link or network.

In some embodiments, the processing device 100, slow memory 102, and fast memory 104 are housed together as part of a single computing device. In some embodiments, one or more of the processing device 100, slow memory 102, and fast memory 104 are separately housed.

The processing device 100 may include a processor 106 and a memory 108. In this regard, the processor 106 may include circuitry such as one or more central processing units (CPUs), graphics processing units (GPUs), tensor processing units (TPUs), microcontrollers, digital signal processors (DSPs), application-specific integrated circuits (ASICs), field programmable gate arrays (FPGAs), hard-wired logic, and/or analog circuitry.

The memory 108 may include volatile and/or nonvolatile memory, such as, for example, a dynamic random access memory (DRAM), static random access memory (SRAM), and/or the like. The memory 108 may store instructions for allowing the processor 106 to execute a machine learning model.

In some embodiments, the slow (or slower) memory 102 may include a storage medium such as, for example, a NAND flash memory, a low-power double data rate (LPDDR) memory, CXL memory, and/or any other type of memory with an access latency that is higher than the access latency of the fast (or faster) memory 104.

The fast memory 104 may include a storage medium such as, for example, a DRAM, high-bandwidth memory (HBM), and/or any other type of memory with an access latency that is lower than the access latency of the slow memory 102. In some embodiments, the slow memory 102 and the fast memory 104 are part of a tiered memory hierarchy where memory devices accessible to the processing device 100 are organized based on their access and response times. A memory device in the hierarchy may be deemed to be a slow or slower memory, or a fast or faster memory, relative to other memory devices in the memory hierarchy, depending on a level or tier of the hierarchy assigned to the memory device.

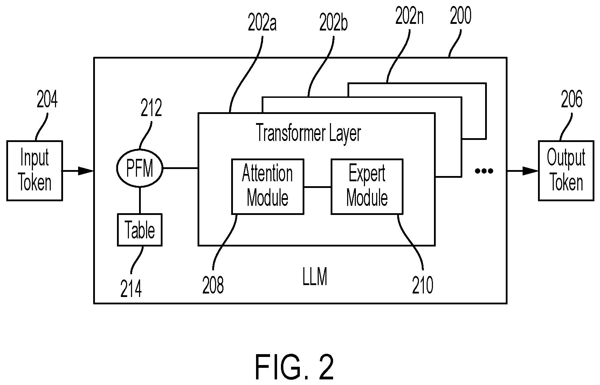

FIG. 2 depicts a block diagram of an LLM executed by the processor 106 according to one or more embodiments of the present disclosure. The LLM includes one or more (e.g., N) neural network layers 202a-202n (collectively referenced as 202) implemented as transformer layers. The neural network layers 202 may be configured to take an input token 204 and process and transform the input token 204 to generate an output token 206. For example, the input token 204 may be a word or a phrase, and the output token 206 may be a next word or phrase in a sequence that is predicted by the LLM based on the input token 204.

The layers 202 may be sequentially invoked to generate the output token 206. For example, a first layer 202a may process the input token 204 to generate a first output. The first output may be an input to a second layer 202b which may generate a second output based on the input. The other layers of the LLM 200 may be sequentially invoked until the output token 206 is generated.

In some embodiments, a neural network layer 202 includes an attention module 208 and an expert module 210. The attention module 208 may be configured to use a "self-attention" mechanism to analyze relationships between tokens, including the input token, to understand context by weighing the importance of each token relative to others, regardless of their position in the sequence.

The expert module 210 may be configured to use the contextual information generated by the attention module 208 to transform the input data further to capture more complex relationships in the data. In some embodiments, the expert module 210 may invoke one or more experts or specialized machine learning models to refine the representation of the input data. In some embodiments, a subset of an available set of experts is selected based on an input token. The expert module 210 may use the refined representations to predict a next token of a sequence of tokens.

In some embodiments, the set of available experts from which the expert module 210 may select its subset of experts is preset. In some embodiments, the subset of experts to be selected from the set of available experts is also preset.

In some embodiments, one or more of the experts is embodied as a feedforward neural network with its own independent set of parameters. The size (e.g., number of parameters) of the expert may be smaller than the size of the LLM. In some embodiments, an expert is trained to handle a specific task. For example, the expert may be trained on a specific subset of training data or tasks, to allow the expert to focus on a particular aspect of a broader problem. For example, in a language processing task, one expert may be trained to process syntax while another expert may be trained to process semantics.

In some embodiments, the LLM 200 includes a prefetch module (PFM) 212 configured to identify the experts to be used by the expert module 210 in the N layers of the LLM 200. The PFM 212 may prefetch or move the identified experts from the slow memory 102 to the fast memory 104. The prefetching of an expert will be understood to mean that the retrieval of parameters (such as weights) associated with the expert.

For example, if the expert module 210 of a layer 202 is configured to use two experts, and there are 120 layers (N = 120) in the LLM, the PFM 212 is configured to prefetch 240 experts (2 x 120 = 240) from the slow memory 102 to the fast memory 104. In some embodiments, the command to prefetch the experts to be used for the N layers of the LLM 200 is provided to the slow memory 102 prior to start of the process in the first layer to generate the output token 206 by the LLM. In this manner, the command may be transmitted once for the N layers, allowing the process of retrieving the experts to commence, and allowing at least some if not all of the requested experts to reside in the fast memory 104 when a particular layer 202 is ready to use its expert.

In some embodiments, the specific experts to retrieve by the PFM 212 is provided in a prefetch table 214. In this regard, the prefetch table may store identifiers of the specific experts for one or more (e.g., all) tokens in the vocabulary of the LLM, and for the one or more (e.g., all) layers 202 of the LLM. The PFM 212 may perform a lookup of table for the input token 204, and identify the specific experts stored in the table for the input token 204 for the one or more layers 202 of the LLM.

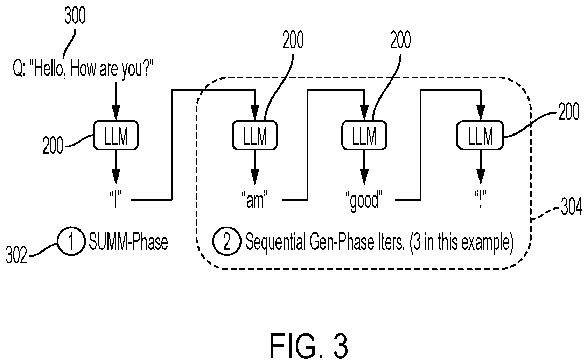

FIG. 3 depicts a conceptual diagram of various phases executed by the LLM 200 as it undergoes an inference process based on an input query or prompt 300 according to one or more embodiments of the present disclosure. The input query 300 may be provided, for example, by an end user. The input query 300 may be, for example, "Hello, How are you?" The input query 300 is provided to the LLM 200 for generating an output responsive to the input query.

The LLM 200 may go through a summarization phase 302 and an iterative generation phase 304 to generate the output response based on the input query. In this regard, the LLM 200 may generate a sequence of tokens (e.g., words or phrases) based on the input prompt, and process the initial input sequence to predict a first token during a summarization phase 302 of the inference process. In the example of FIG. 3, the first token generated during the summarization phase 302 may be "I."

During the generation phase 304 of the inference process, the LLM 200 may take a token generated in a prior iteration of the LLM, and add the token to the input sequence. The LLM 200 may predict a next token based on the input sequence. In this regard, the LLM 200 may process the input sequence using the experts identified for the N layers 202 of the LLM. The iterative generation of tokens based on previous tokens may continue until a stopping criterion is met. The stopping criterion may be, for example, reaching a maximum number of tokens or encountering a specific token. For example, in the example of FIG. 3, the LLM 200 iteratively generates the tokens "am," "good," and "!," during the generation phase 304, to output "I am good!" in response to the input query.

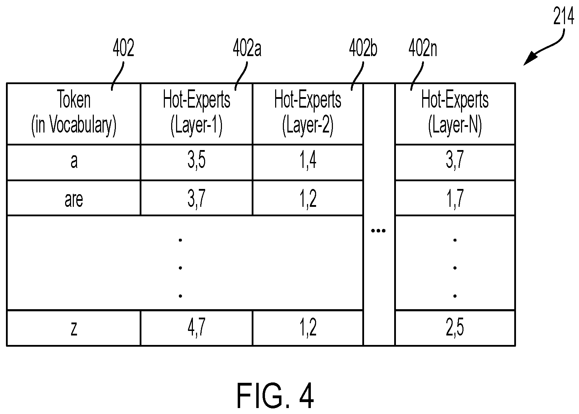

FIG. 4 depicts a prefetch table 214 according to one or more embodiments of the present disclosure. In some embodiments, the prefetch table 214 is of a fixed size that is based on the size of the vocabulary of the LLM 200, the number of layers 202 of the LLM 200, and the number of experts to be identified per token, per layer. The vocabulary of the LLM 200 may contain the pre-defined tokens (e.g., all the possible tokens) that the model can process, including the tokens used for training the LLM.

In some embodiments, the prefetch table 214 includes a token column 402 storing the tokens in the vocabulary of the LLM. For each token in the token column, the prefetch table 214 includes experts (also referred to as hot experts) that have been identified for each layer of the LLM 200. The experts may be stored in layer-specific expert columns 402a-402n. In this manner, each row of the prefetch table 214 identifies the experts associated with a token for the N layers of the LLM 200.

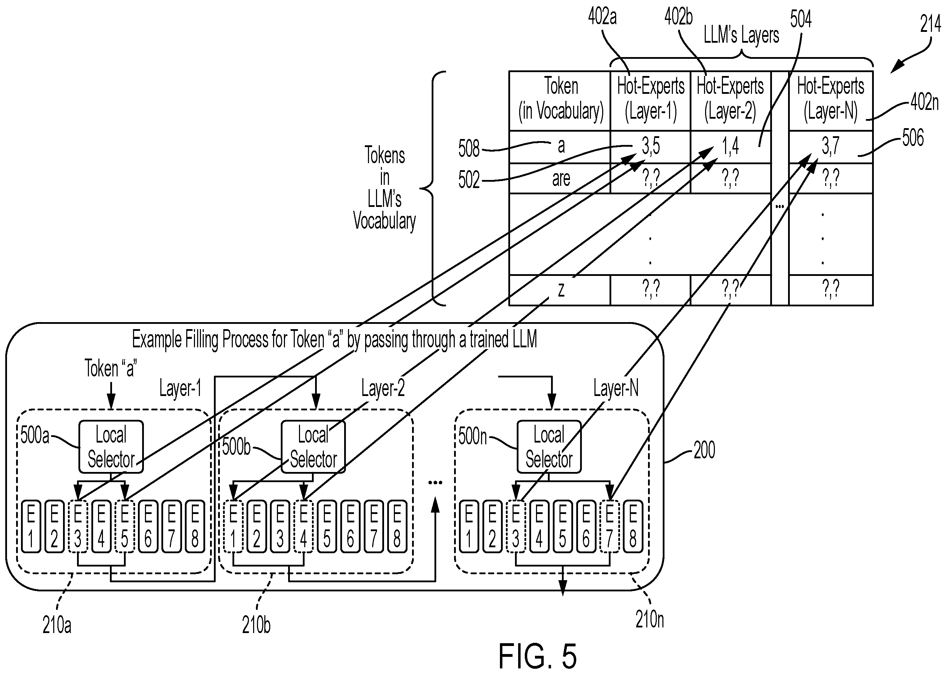

FIG. 5 depicts a conceptual diagram of a process for populating the prefetch table 214 according to one or more embodiments of the present disclosure. In some embodiments, the PFM 212 identifies each token in the LLM's vocabulary, and provides the token to the LLM 200. As the token is processed by the LLM 200 during the generative phase, the expert module 210 of each layer identifies one or more experts that are to be invoked to generate a next token. In this regard, the expert module 210 in each layer includes a local selector 500a-500n (collectively referenced as 500) that is configured to identify the expert based on the input sequence to the layer.

In some embodiments, the local selector 500 identifies the expert based on a routing algorithm that aims to balance accuracy and efficiency. For example, the routing algorithm may be a top-k routing algorithm that predicts a probability distribution over the experts based on a given input, and the top-k experts with the highest probabilities are chosen. Other routing algorithms include expert choice routing where experts actively compete for tokens rather than tokens being passively routed to experts, sparse routing where only a subset of experts are activated for each input token to create a sparse network, or the like.

In the example of FIG. 5 an identified token of the LLM's vocabulary (e.g., token "a") is provided to the first layer of the LLM for processing by the corresponding expert module 210a. Assuming that the LLM is preset to select two experts per layer (e.g., based on a hyperparameter of the model), the local selector 500a for a first layer selects experts identified as "3" and "5" based on the identified token. The selected experts are stored in cell 502 in association with the token 508 in the first layer expert column 402a.

The selected experts of the first layer process the token to generate an output that is provided as input to a second layer of the LLM 200. The local selector 500b for the second layer selects experts identified as "1" and "4" based on the provided input. The selected experts are stored in cell 504 in association with the token 508 in the second layer expert column 402b.

The process continues until the local selector 500n of the nth layer processes its input to select experts identified as "3" and "7." The selected experts are stored in cell 506 in association with the token 508 in the nth layer expert column 402n.

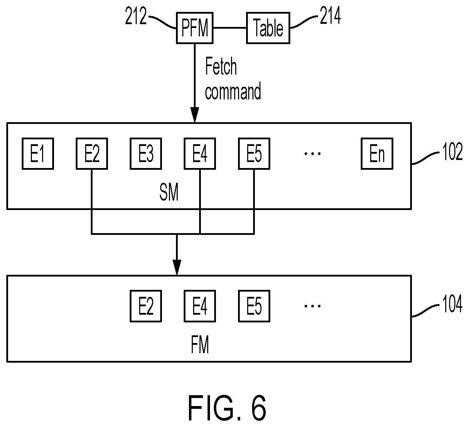

FIG. 6 depicts a conceptual diagram of a process for retrieving or fetching experts from the slow memory 102 (e.g., a first storage medium) to the fast memory 104 (e.g., a second storage medium) according to one or more embodiments of the present disclosure. In some embodiments, the PFM 212 identifies an input token and determines, based on the information stored in the prefetch table 214 the experts stored in the table for the token for N layers for the LLM 200. The PFM 212 may transmit a command (e.g., a fetch command) to move the identified experts from the slow memory 102 to the fast memory 104.

In some embodiments, the fetch command is transmitted at a beginning of a generative phase of the LLM. For example, the fetch command is transmitted prior to processing of the input token 204 by the first layer 202a of the LLM 200. The slow memory 102 receiving the command may identify a location of the identified expert, and retrieve the expert for storing the expert in the fast memory 104.

In some embodiments, the fetch command includes identifiers of the experts (e.g., E2, E4, E5) to be moved. In some embodiments, the fetch command includes a destination storage medium (e.g., the fast memory 104) to which the experts are to be moved. In some embodiments, the destination storage medium is assumed, and the fetch command need not expressly identify the destination storage medium.

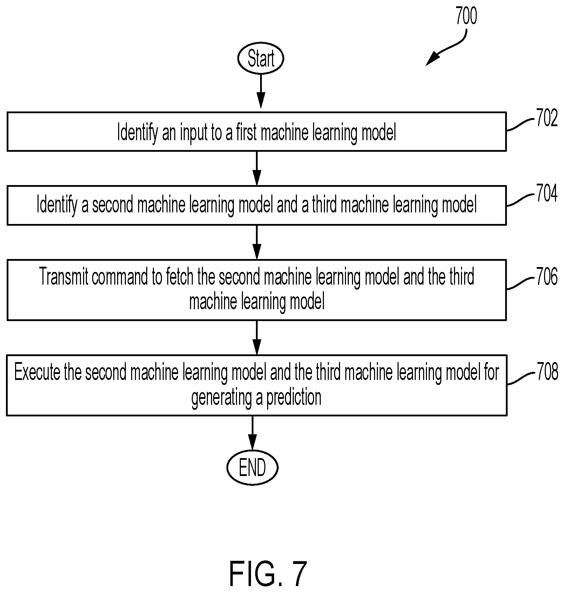

FIG. 7 depicts a flow diagram of a process 700 for prefetching experts according to one or more embodiments of the present disclosure. The process starts, and in step 702, the PFM 212 identifies an input to the LLM 200 (e.g., a first machine learning model). The input may be, for example, a first token generated after the summarization phase, or a token generated after an iteration of the generation phase of the LLM 200.

In step 704, the PFM 212 identifies, based on the identified input, the experts (e.g., a second machine learning model and a third machine learning model) associated with the layers 202 of the LLM 200. The experts may be identified by performing a lookup of the prefetch table 214 using the input as an index to the table.

In step 706, the PFM 212 transmits a command to fetch the experts (e.g., the second machine learning model and the third machine learning model) from the slow memory 102 (e.g., a first storage medium) to the fast memory 104 (e.g., a second storage medium). The command may include the identifiers of the experts to be fetched. The slow memory 102 may receive the command, and identify a location of the memory in which the experts are stored. The slow memory 102 may retrieve the identified experts from the identified locations for storing in the fast memory 104.

In step 708, the experts (e.g., the second machine learning model and the third machine learning model) corresponding to the layers 202 of the LLM 200 are executed by the corresponding expert modules 210 for generating a prediction. For example, the prediction may include a prediction of a next token of a sequence of tokens to be output in response to the input.

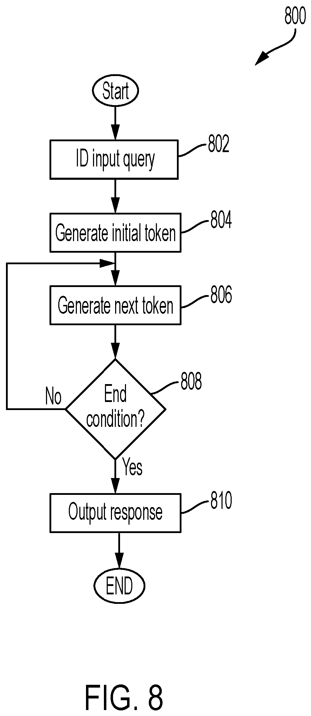

FIG. 8 depicts a flow diagram of an LLM inference process 800 using experts according to one or more embodiments of the present disclosure. The process starts, and in step 802, the LLM 200 receives an input query or prompt such as, for example, "Hello, How are you?" The LLM 200 executes a summarization phase and an iterative generation phase based on the input.

In step 804, the LLM 200 generates an initial token as an output of the summarization phase. The initial token may be, for example, the word "I" as shown in the example of FIG. 3.

In step 806, the generative phase is executed where a next token is generated based on an input sequence. For example, in a first iteration of the generative phase, the word "am" may be generated based on an input sequence that includes the token "I." The generative phase may invoke the N layers 202 of the LLM 200 to process the input sequence to generate the next token. In some embodiments, prior to invoking the layers 202, the PFM 212 may prefetch the experts associated with the input token (e.g., the token "I") for the layers 202 of the LLM 200. This may allow at least some (if not all) the experts to be in the fast memory 104 prior to the expert being used by a particular layer 202 during the generative phase.

In step 808, a determination is made as to whether an end condition or stopping criterion has been met. The end condition may include, for example, determining that a maximum number of tokens have been generated, or detecting a specific token.

If the end condition has not been met, the process returns to step 806 to repeat the generation phase to generate a next token.

Referring again to step 808, if the end condition has been met, the generated tokens may be processed into a response, and the response may be output in step 810 as a response to the input query. In the example of FIG. 3, the response "I am good!" may be output in response to the query "Hello, How are you?"

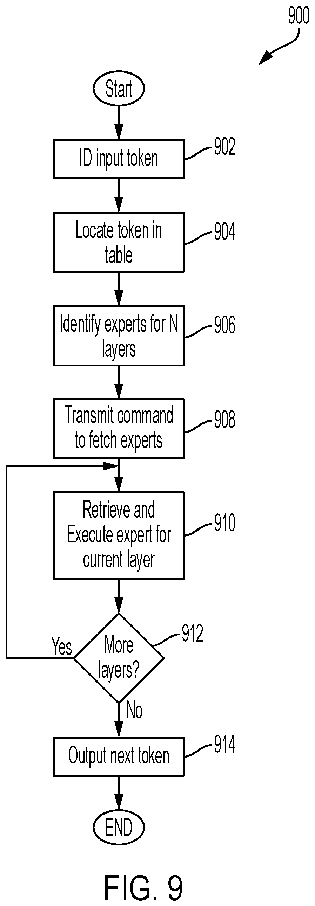

FIG. 9 depicts a flow diagram of a process 900 for fetching and executing experts according to one or more embodiments of the present disclosure. The process starts, and in step 902, the PFM 212 identifies an input token. The input token may be, for example, a first token generated after the summarization phase, or a token generated after an iteration of the generation phase of the LLM 200.

In step 904, the PFM 212 searches and locates the input token in the prefetch table 214.

In step 906, the PFM 212 identifies the experts for N layers of the LLM 200 that are stored in the prefetch table 214 in association with the token.

In step 908, the PFM 212 transmits a command to the slow memory 102 to fetch the identified experts. The fetch command may include, for example, identifiers of the experts to be fetched.

In step 910, the expert module 210 of a current layer 202 executed by the LLM 200 identifies the expert to be used for the layer for a received input based on a routing algorithm, and transmits a command to the fast memory 104 for retrieving the expert. The retrieved expert is executed for generating an output.

In step 912, a determination is made as to whether there are more layers of the LLM 200 to be executed. If the answer is YES, the output of a prior layer is provided as an input to a next layer, and the process returns to step 910 for executing the next layer of the LLM.

Referring again to step 912, if there are no more layers to execute, the LLM 200 generates and outputs a next token in step 914, based on the processing of the layers and associated experts.

As a person of skill in the art should appreciate, the prefetching of experts for the N layers of the LLM 200 prior to execution of a first layer of the LLM may allow for improved efficiency in the generating of output tokens, and improved data movement and bandwidth usage as experts are retrieved from a slow memory to a fast memory.

The various modules described herein, including the attention module 208, the expert module 210, and the PFM 212 may be implemented via software, firmware, hardware, or a combination of software, firmware and hardware. Also, although the one or more modules are assumed to be separate functional units, a person of skill in the art will recognize that the functionality of the modules may be combined or integrated into a single module, or further subdivided into further sub-modules.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for prefetching experts have been specifically described and illustrated herein, many modifications and variations will be apparent to those skilled in the art. Accordingly, it is to be understood that systems and methods for prefetching experts constructed according to principles of this disclosure may be embodied other than as specifically described herein. The disclosure is also defined in the following claims, and equivalents thereof.

The systems and methods for prefetching experts may contain one or more combination of features set forth below:
A system comprising: a first storage medium; a second storage medium; a processor; and a memory, wherein the memory stores instructions that, when executed by the processor, cause the processor to: identify an input to a first machine learning model having a first layer and a second layer; identify from a table, based on the input, a second machine learning model associated with the first layer and a third machine learning model associated with the second layer; based on identifying the second machine learning model and the third machine learning model from the table, transmit a command to fetch the second machine learning model and the third machine learning model from the first storage medium into the second storage medium; and execute the second machine learning model and the third machine learning model for generating a prediction based on the input.

For example, an access latency of the first storage medium is higher than an access latency of the second storage medium.

For example, the first layer and the second layer respectively include a first transformer layer and a second transformer layer of a neural network.

For example, the second machine learning model and the third machine learning model respectively include a first neural network with a first set of parameters and a second neural network with a second set of parameters.

For example, the second machine learning model and the third machine learning model are respectively trained for a first task and a second task.

For example, the input is a token and the table stores the token, a first identifier for the second machine learning model, and a second identifier for the third machine learning model.

For example, the table includes a plurality of words used to train the first machine learning model.

For example, the processor is further configured to: identify a first word of the plurality of words; provide the first word to the first layer of the first machine learning model, wherein the first layer is configured to select the second machine learning model and generate a first output based on the first word; store in the table a first identifier to the second machine learning model, in association with the first word and the first layer; provide the first output of the first layer to the second layer of the first machine learning model, wherein the second layer is configured to select the third machine learning model and generate a second output based on the first output; and store in the table a second identifier to the third machine learning model, in association with the first word and the second layer.

For example, the input includes a first token generated by the first machine learning model, wherein the prediction includes a second token generated based on the first token.

For example, the first machine learning model includes a large language model.

A method comprising: identifying an input to a first machine learning model having a first layer and a second layer; identifying from a table, based on the input, a second machine learning model associated with the first layer and a third machine learning model associated with the second layer; based on identifying the second machine learning model and the third machine learning model from the table, transmitting a command to fetch the second machine learning model and the third machine learning model from a first storage medium into a second storage medium; and executing the second machine learning model and the third machine learning model for generating a prediction based on the input.

For example, an access latency of the first storage medium is higher than an access latency of the second storage medium.

For example, the first layer and the second layer respectively include a first transformer layer and a second transformer layer of a neural network.

For example, the second machine learning model and the third machine learning model respectively include a first neural network with a first set of parameters and a second neural network with a second set of parameters.

For example, the second machine learning model and the third machine learning model are respectively trained for a first task and a second task.

For example, the input is a token and the table stores the token, a first identifier for the second machine learning model, and a second identifier for the third machine learning model.

For example, the table includes a plurality of words used to train the first machine learning model.

For example, the method further comprising: identifying a first word of the plurality of words; providing the first word to the first layer of the first machine learning model, wherein the first layer is configured to select the second machine learning model and generate a first output based on the first word; storing in the table a first identifier to the second machine learning model, in association with the first word and the first layer; providing the first output of the first layer to the second layer of the first machine learning model, wherein the second layer is configured to select the third machine learning model and generate a second output based on the first output; and storing in the table a second identifier to the third machine learning model, in association with the first word and the second layer.

For example, the input includes a first token generated by the first machine learning model, wherein the prediction includes a second token generated based on the first token.

For example, the first machine learning model includes a large language model.

## Claims

1. A system comprising:
a first storage medium;
a second storage medium;
a processor; and
a memory, wherein the memory stores instructions that, when executed by the processor, cause the processor to:
identify an input to a first machine learning model having a first layer and a second layer;
identify from a table, based on the input, a second machine learning model associated with the first layer and a third machine learning model associated with the second layer;
based on identifying the second machine learning model and the third machine learning model from the table, transmit a command to fetch the second machine learning model and the third machine learning model from the first storage medium into the second storage medium; and
execute the second machine learning model and the third machine learning model for generating a prediction based on the input.

2. The system of claim 1, wherein an access latency of the first storage medium is higher than an access latency of the second storage medium.

3. The system of claim 1 or 2, wherein the first layer and the second layer respectively include a first transformer layer and a second transformer layer of a neural network.

4. The system of any one of claims 1 to 3, wherein the second machine learning model and the third machine learning model respectively include a first neural network with a first set of parameters and a second neural network with a second set of parameters.

5. The system of any one of claims 1 to 4, wherein the second machine learning model and the third machine learning model are respectively trained for a first task and a second task.

6. The system of any one of claims 1 to 5, wherein the input is a token and the table stores the token, a first identifier for the second machine learning model, and a second identifier for the third machine learning model.

7. The system of any one of claims 1 to 6, wherein the table includes a plurality of words used to train the first machine learning model.

8. The system of claim 7, wherein the processor is further configured to:
identify a first word of the plurality of words;
provide the first word to the first layer of the first machine learning model, wherein the first layer is configured to select the second machine learning model and generate a first output based on the first word;
store in the table a first identifier to the second machine learning model, in association with the first word and the first layer;
provide the first output of the first layer to the second layer of the first machine learning model, wherein the second layer is configured to select the third machine learning model and generate a second output based on the first output; and
store in the table a second identifier to the third machine learning model, in association with the first word and the second layer.

9. The system of any one of claims 1 to 8, wherein the input includes a first token generated by the first machine learning model, wherein the prediction includes a second token generated based on the first token.

10. The system of any one of claims 1 to 9, wherein the first machine learning model includes a large language model.

11. A method comprising:
identifying an input to a first machine learning model having a first layer and a second layer;
identifying from a table, based on the input, a second machine learning model associated with the first layer and a third machine learning model associated with the second layer;
based on identifying the second machine learning model and the third machine learning model from the table, transmitting a command to fetch the second machine learning model and the third machine learning model from a first storage medium into a second storage medium; and
executing the second machine learning model and the third machine learning model for generating a prediction based on the input.

12. The method of claim 11, wherein an access latency of the first storage medium is higher than an access latency of the second storage medium.

13. The method of claim 11 or 12, wherein the first layer and the second layer respectively include a first transformer layer and a second transformer layer of a neural network.

14. The method of any one of claims 11 to 13, wherein the second machine learning model and the third machine learning model respectively include a first neural network with a first set of parameters and a second neural network with a second set of parameters.

15. The method of any one of claims 11 to 14, wherein the second machine learning model and the third machine learning model are respectively trained for a first task and a second task.
